# EUROPÄISCHE PATENTSCHRIFT

(11) **EP 1 700 367 B1**
(45) Veröffentlichungstag und Bekanntmachung des Hinweises auf die Patenterteilung: **24.02.2010**
(21) Anmeldenummer: 04802889.8
(22) Anmeldetag: 07.12.2004
(51) Int. Cl.: H02J 7/14, H02P 9/30

(54) **ELEKTRISCHE EINRICHTUNG UND BETRIEBSVERFAHREN**
ELECTRIC DEVICE AND OPERATING METHOD
DISPOSITIF ELECTRIQUE ET PROCEDE DE FONCTIONNEMENT

(30) Priorität: 24.12.2003 DE 10361215
(43) Veröffentlichungstag der Anmeldung: 13.09.2006
(73) Patentinhaber: ROBERT BOSCH GMBH, 70442 Stuttgart (DE); Daimler AG, 70327 Stuttgart (DE); BMW AG, 80788 München (DE)
(72) Erfinder: LAUFENBERG, Xaver, 71691 Freiberg (DE); EYNIUS, Dominique, 71711 Steinheim/Murr (DE); SUELZLE, Helmut, 71691 Freiberg (DE); USBECK, Stephan, 71769 Erdmannshausen (DE); SPAETH, Matthias, 71769 Asperg (DE); NEUSER-HOFFMANN, Miriam, 74321 Bietigheim-Bissingen (DE); MYRZIK, Christian, 82275 Emmering (DE); SCHMID, Manfred, 85250 Pipinsried (DE); NIETFELD, Franz, 73732 Esslingen (DE); THIEL, Alexander, 71263 Weil der Stadt (DE); BRAUN, Harald, 73734 Esslingen (DE); EBNER, Norbert, 71642 Ludwigsburg (DE)
(86) Internationale Anmeldenummer: PCT/DE2004/002681
(87) Internationale Veröffentlichungsnummer: WO 2005/062441

(56) Entgegenhaltungen:
- EP-A- 1 111 753
- WO-A-2004/106102
- DE-A1- 10 250 172
- US-A1- 2003 107 351

## Beschreibung

### Technisches Gebiet

Die Erfindung bezieht sich auf eine elektrische Einrichtung nach dem Oberbegriff des Anspruchs 1 und ein Betriebsverfahren nach dem Oberbegriff des Anspruchs 9. Eine derartige Einrichtung ist für die kombinierte Spannungs- und Momentenregelung einer mechanische Energie in elektrische Energie umwandelnden elektrischen Maschine, wie beispielsweise eines Generators in dem Bordnetz eines Kraftfahrzeugs, vorgesehen.

Es ist bekannt, dass die Zuschaltung eines elektrischen Verbrauchers mit einer hohen elektrischen Leistung in dem Bordnetz eines Kraftfahrzeugs eine starke Belastung des Generators zur Folge hat. Da die Zuschaltung des elektrischen Verbrauchers zu einem Spannungseinbruch in dem Bordnetz führt, versucht ein dem Generator zugeordneter Spannungsregler durch Erhöhung des Erregerstroms des Generators die von dem Generator abzugebende Leistung zu erhöhen. Dadurch wird aber das von dem Generator verursachte bremsende Moment derart erhöht, dass insbesondere bei einer geringen Drehzahl der Verbrennungskraftmaschine ein störender Einbruch der Drehzahl auftreten kann. Damit ein solcher Drehzahleinbruch möglichst klein gehalten wird, werden bei Einrichtungen, die eine sogenannte Load Response Einrichtung aufweisen, Maßnahmen vorgesehen, die verhindern, dass der Generator zu stark belastet wird. Dadurch wird auch verhindert, dass bei der Verbrennungskraftmaschine ein Drehzahleinbruch auftritt. Da jedoch die benötigte elektrische Leistung nicht mehr bereitgestellt werden kann, kann jetzt ein unerwünschter Spannungseinbruch auftreten.

Einer derartigen Drehzahländerung kann, wenigstens in bestimmten Betriebszuständen, beispielsweise dadurch entgegengewirkt werden, dass ein ausreichendes Überschussmoment vorgehalten wird. Dies führt jedoch in nachteiliger Weise zu einer Verbrauchserhöhung. Weiterhin kann die Generatorausregelung definiert verlangsamt werden. Dies kann jedoch in nachteiliger Weise zu einer Vergrößerung der Schwankungen der Bordnetzspannung führen. Derartige Schwankungen sind jedoch unerwünscht, da sie die Lebensdauer der Batterie nachteilig beeinflussen und spannungsempfindliche Bauelemente schädigen können. Weiterhin könnte ein zusätzlicher Verbraucher definiert über Rampen zugeschaltet werden. Dies erfordert jedoch einen größeren schaltungstechnischen Aufwand und führt daher zu höheren Erzeugniskosten. Bei allen erwähnten Alternativen ist eine optimale Anpassung an das tatsächlich verfügbare Überschussmoment nicht ohne weiteres möglich.

Aus DE 39 31 897 A1 ist ein Verfahren zur Spannungsregelung für Generatoren bei Kraftfahrzeugen bekannt, bei dem in einem ersten Zeitintervall die Generatorausgangsspannung auf einen maximalen Wert eingestellt wird, damit unabhängig von der Umgebungstemperatur eine zuverlässige Aufladung der Fahrzeugbatterie erfolgt. In einem zweiten Zeitintervall wird die Generatorausgangsspannung nach einer bekannten Methode, üblicherweise in Abhängigkeit von der Batterietemperatur, geregelt. Dabei erfolgt die Festlegung des ersten Zeitintervalls in Abhängigkeit vom Ladezustand der Batterie.

Aus der US 2003/107351 A1 ist eine elektrische Einrichtung mit einem Generator bekannt, die beispielsweise zur Verwendung im Bordnetz eines Kraftfahrzeugs vorgesehen ist. Die Generatorspannung wird mit Hilfe eines Reglers geregelt, wobei die Regelung so durchgeführt wird, dass in bestimmten Bereichen für die Regelung eine Spannungsregelung durchgeführt wird, während in anderen Bereichen eine Momentenregelung durchgeführt wird. Aus dieser Entgegenhaltung ist auch noch ein Verfahren für den Betrieb einer einen Generator mit einem Regler umfassenden elektrischen Einrichtung bekannt, die prüft, ob die erfasste Spannung in einem vorgebbaren Bereich um die Sollspannung. Zur exakten Regelung wird eine Spannungsregelung auf die Sollspannung durchgeführt. Es ist aber auch bei bestimmten Bedingungen eine Momentenregelung möglich.

Aus den Druckschriften DE 102 50 172 A1 bzw.e EP 1111 753 A1 sind verschiedene Spannungsregulierungseinrichtungen zum Steuern der Ausgangsgröße einer Fahrzeugwechselstrommaschine bekannt, bei der die Regelung nach vorgebbaren Kriterien erfolgt und vorzugsweise so durchgeführt wird, dass die Spannung vorgebbare Werte aufweist. Die Regelung selbst erfolgt wie allgemein üblich durch Beeinflussung des Erregerstroms in Abhängigkeit von einer gemessenen Generatorspannung.

### Darstellung der Erfindung

Die erfindungsgemäße Lösung schafft eine Möglichkeit, im Betrieb der Einrichtung die Ausregelgeschwindigkeit der Spannungslage an die tatsächliche Geschwindigkeit der Momentenbereitstellung anzupassen. Dazu wird eine koordinierende Einheit vorgesehen, die festlegt, auf welche Weise einzelne Größen eingestellt und verändert werden, um eine optimale Regelung zu erhalten. Das erfindungsgemäße Regelungskonzept ermöglicht es dieser koordinierenden Einheit, Extremzustände, wie eine Spannungsregelung bei starken Momentänderungen, eine Momentenregelung bei starken Spannungsschwankungen, sowie beliebige Zwischenzustände einzustellen. Letztlich führt dies zu einer Adaption der Dynamik des Generators an die tatsächlich mögliche Motordynamik.
Die Größen Spannung und Moment werden parallel betrachtet. Die Generatorregelung lässt sich dabei in drei Bereiche einteilen.

Der erste Bereich bezieht sich auf eine Spannungsregelung in dem unmittelbaren Umfeld der Sollspannung und bei Änderungen des Bremsmoments nur bis zum eingestellten Überschussmoment.

Der zweite Bereich betrifft die Situation, dass der Generator die Last- und Spannungsänderung mit dem verfügbaren Überschussmoment nicht ausregeln kann, die Spannungsabweichung aber gerade noch innerhalb der zulässigen Grenzen liegt. Der Begrenzungswert (Überschussmoment) kann dabei innerhalb der Möglichkeiten des Momentenaufbaus in einem beliebigen Verlauf geändert werden. Je nach Zielsetzung können dabei verschiedene Strategien realisiert werden.
Der dritte Bereich betrifft die Situation, dass die Bordnetzspannung außerhalb der zulässigen Grenzen liegt. In diesem Fall hat die Spannungsregelung die höchste Priorität. Die Grenzen der genannten Bereiche lassen sich dabei zweckmäßig, im Sinne einer optimalen Anpassung, auch noch beliebig verschieben.

### Zeichnung

Anhand der Zeichnung wird die Erfindung nachstehend näher erläutert.

Es zeigt:
- Figur 1: ein erstes Blockschaltbild eines einen Verbrennungsmotor und eine elektrische Einrichtung mit einem Generator und einem Bordnetz umfassenden Systems,
- Figur 2: ein zweites Blockschaltbild mit Funktionsmodulen für die Regelung des Generators,
- Figur 3: ein drittes Blockschaltbild mit Darstellung von Regelungsbereichen,
- Figur 4: in einem Diagramm diverse Kurvenverläufe.

### Ausführungsvarianten

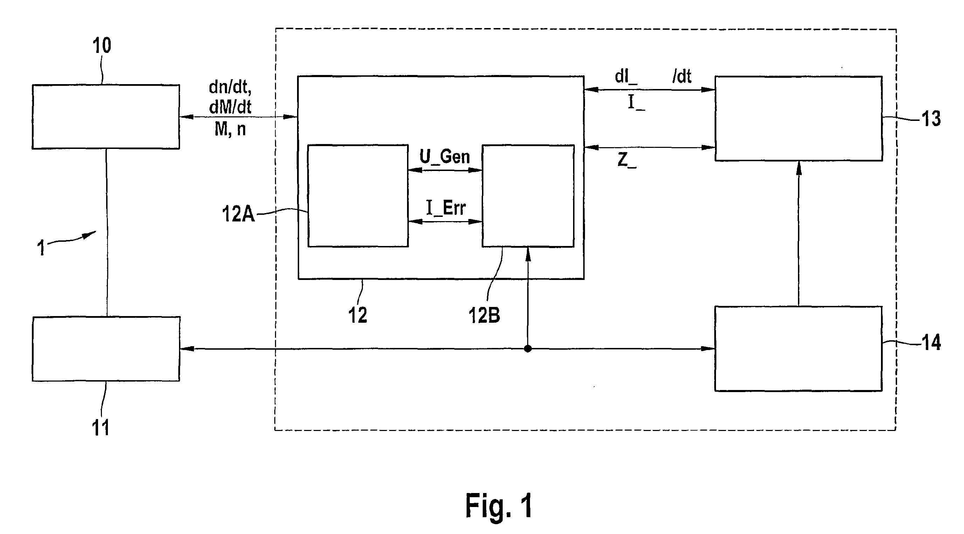

Figur 1 zeigt ein erstes Blockschaltbild eines einen Verbrennungsmotor und eine Einrichtung mit einem Generator und einem Bordnetz umfassenden Systems 1. Schematisch dargestellt sind verschiedene Funktionsmodule und die funktionalen Zusammenhänge zwischen diesen Funktionsmodulen. Mit Bezugsziffer 10 ist ein Verbrennungsmotor, mit Bezugsziffer 11 eine diesem Verbrennungsmotor zugeordnete elektronische Motorsteuerung bezeichnet. Mit Bezugsziffer 12 ist ein elektrischer Generator bezeichnet, der eine elektrische Maschine 12A und einen Regler 12B umfasst. Die elektrische Maschine 12A wird von dem Verbrennungsmotor 10 angetrieben und wandelt die von dem Verbrennungsmotor 10 erzeugte mechanische Energie in die für ein elektrisches Bordnetz benötigte elektrische Energie um. Das lediglich schematisch dargestellte Bordnetz ist mit Bezugsziffer 13 bezeichnet. Weiterhin umfasst das System 1 ein Funktionsmodul Batteriemanagement, das die Bezugsziffer 14 trägt. Das Bordnetz 13 und der Generator 12 sind über den Laststrom I_Last verknüpft. Bei Zuschaltung eines starken elektrischen Verbrauchers in dem Bordnetz 13, beispielsweise einer Heckscheibenheizung im Winter, tritt eine große zeitliche Änderung dI_Last/dt des Laststroms I_Last auf und somit wird eine starke Belastung des Generators 12 ausgelöst. Die starke zeitliche Änderung des Laststroms, in diesem Fall ein starker Anstieg des Laststrom I_Last, führt zu einem Einbruch der von der elektrischen Maschine 12A abgegebenen Spannung U_Gen. Die elektrische Maschine 12A und der Regler 12B sind über die Größen Spannung U_Gen und Erregerstrom I_Err miteinander verknüpft. Sobald der Regler 12B den Abfall der Spannung U_Gen erfasst, versucht er durch Steuerung und entsprechende Erhöhung des Erregerstroms I_Err die von dem Generator 12 abgegebene Leistung zu erhöhen. Dadurch wird jedoch das von dem Generator 12 verursachte bremsende Moment ebenfalls vergrößert. Der Verbrennungsmotor 10 und der Generator 12 sind über die Größen Moment M und Drehzahl n, sowie deren zeitliche Änderungen dM/dt beziehungsweise dn/dt miteinander verknüpft. Die durch den Regler 12B ausgelöste Erhöhung des Erregerstroms I_Err und der damit bewirkte Anstieg des bremsenden Moments M des Generators 12 wirken sich auf die Drehzahl n des Verbrennungsmotors 10 aus. Besonders bei geringen Drehzahlen n des Verbrennungsmotors 10 kann es so zu einem unerwünschten Drehzahleinbruch kommen. Die erfindungsgemäße Lösung schafft nun eine Möglichkeit, im Betrieb des zuvor beschriebenen Systems 1 die Ausregelgeschwindigkeit der Spannung an die tatsächliche Geschwindigkeit der Momentenbereitstellung anzupassen

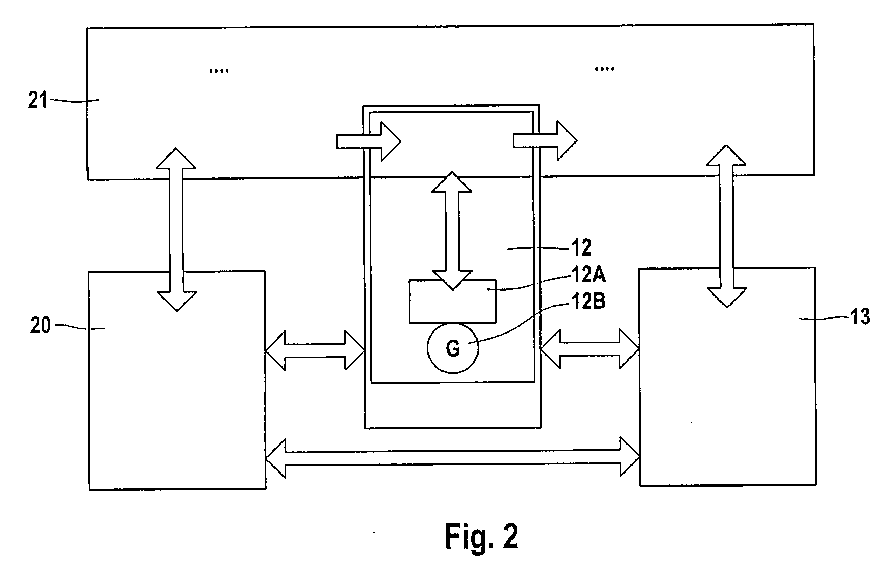

Figur 2 zeigt ein zweites Blockschaltbild, in dem diverse Funktionsmodule für die Regelung des Generators 12 und deren Zusammenwirken schematisch dargestellt sind. Der Generator 12 umfasst die elektrische Maschine 12A und einen Regler 12B. Mit Bezugsziffer 13 ist ein das elektrische Bordnetz repräsentierendes Funktionsmodul bezeichnet. Das Funktionsmodul 20 repräsentiert den Triebstrang des Fahrzeugs. Mit Bezugsziffer 21 ist wenigstens ein Steuergerät bezeichnet, das die funktionalen Abläufe bei der Regelung des Generators 12 koordiniert. Mit den in Figur 2 dargestellten Pfeilen und Doppelpfeilen sind die funktionalen Verknüpfungen angedeutet, die zwischen den einzelnen Baugruppen und Funktionsmodulen bestehen.

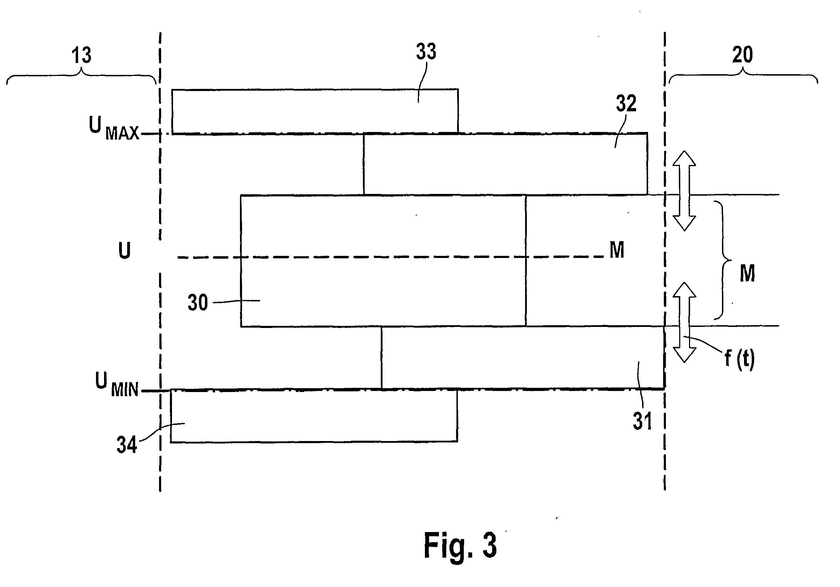

Der Kern der Erfindung besteht darin, eine elektrische Einrichtung mit einem Generator zu schaffen, bei der eine außerordentlich flexible Regelung des Generators ermöglicht wird, um eine möglichst hohe Spannungskonstanz und große Betriebssicherheit sicherzustellen. Dazu sind erfindungsgemäß verschiedene Regelungsbereiche vorgesehen, die eine optimale Regelungsstrategie ermöglichen. Dies wird anhand von Figur 3 erläutert, die ein drittes Blockschaltbild mit Darstellung von Regelungsbereichen zeigt.

In dieser Darstellung wird wiederum auch die Wechselwirkung zwischen dem Bordnetz (Funktionsmodul 13 in Figur 2) und dem Triebstrang (Funktionsmodul 20 in Figur 2) verdeutlicht. Insgesamt lassen sich im Wesentlichen drei Typen von Regelungsbereichen charakterisieren, die ggf. nochmals unterteilt sind. In einem ersten Bereich 30, der in dem unmittelbaren Umfeld der Sollspannung U_Soll liegt, ist eine Spannungsregelung vorgesehen. Sofern dabei Änderungen des Moments M auftreten, sind diese bis zu einem vorgebbaren Grenzwert, dem Überschussmoment M_Überschuss, zugelassen. An diesen ersten Regelungsbereich (Bereich 30) schließt sich ein Regelungsbereich (Bereiche 31, 32) an, in dem der Generator 12 auftretende Last- und Spannungsänderungen mit dem zur Verfügung stehenden, vorgebbaren Überschussmoment M_Überschuss nicht ausregeln kann, wobei aber die auftretende Spannungsabweichung noch innerhalb eines zulässigen Spannungsbereichs liegt. Dabei wird der zulässige Spannungsbereich durch die vorgebbaren Grenzwerte U_H und U_L bestimmt. In einem dritten Regelungsbereich (Bereiche 33,34) schließlich liegt eine Situation vor, dass die Spannung des Bordnetzes 13 außerhalb des zulässigen Spannungsbereichs liegt, also den oberen Grenzwert U_H überschreitet oder den unteren Grenzwert U_L unterschreitet.

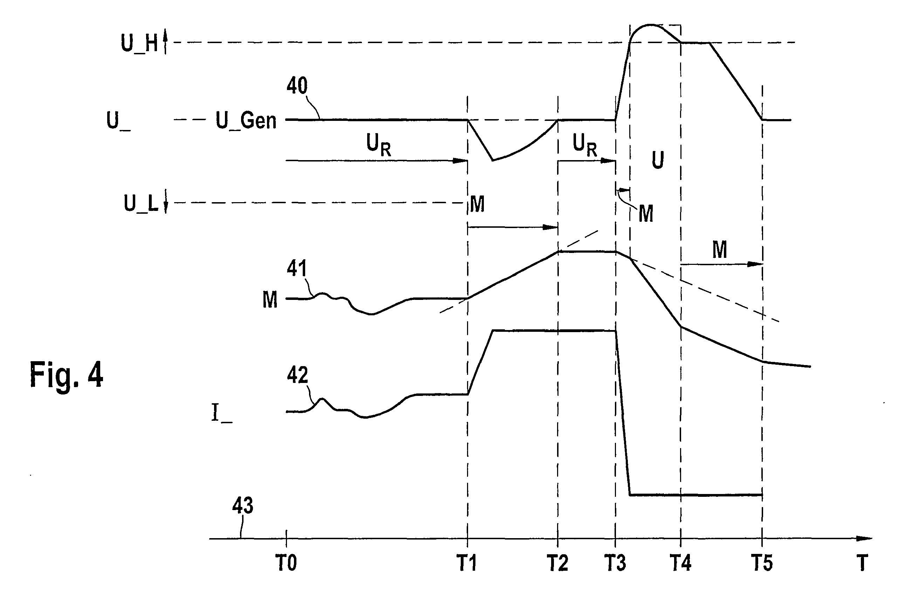

Figur 4 zeigt in einem Diagramm diverse Kurvenverläufe anhand derer im Folgenden die Funktionsweise der elektrischen Einrichtung 1 erläutert wird. Über einer Zeitachse 43 sind Kurven aufgetragen, die bestimmte Größen als Funktion der Zeit T darstellen. In dem Kurvenverlauf 42 ist der Laststrom I_Last als Funktion der Zeit T dargestellt. Weiterhin ist in dem Kurvenverlauf 41 das Moment M als Funktion der Zeit T dargestellt. Schließlich ist in dem Kurvenverlauf 40 die Generatorspannung U_Gen als Funktion der Zeit T dargestellt. Zusätzlich sind in dem Bereich des die Generatorspannung repräsentierenden Kurvenverlaufs noch besondere Spannungswerte hervorgehoben, nämlich ein Sollwert U_Soll, ein Minimalwert U_L und ein Maximalwert U_H. Dabei liegt der Sollwert U_Soll zwischen den genannten Extremwerten U_H und U_L. Zunächst wird das Zeitintervall zwischen einem Zeitpunkt T0 und einem Zeitpunkt T1 betrachtet. Die Kurve 42 zeigt, dass der Laststrom I_Last ein bestimmtes Niveau aufweist und in nur vergleichsweise engen Grenzen schwankt, was auf eine im Wesentlichen konstante Belastung des Bordnetzes 13 hindeutet. Die die Generatorspannung U_Gen repräsentierende Kurve 40 zeigt, dass die Generatorspannung U_Gen im Wesentlichen konstant ist, das Sie in dem betrachteten Zeitintervall TO-T1 auf ihren Sollwert U_Soll geregelt wird. Auch der das Moment M repräsentierende Kurvenverlauf 41 zeigt relativ geringe Schwankungen des Moments M, da bereits geringe Momentänderungen ausreichen, um die Schwankungen des Laststroms I_Last zu kompensieren. Das Intervall T0-T1 entspricht somit dem oben schon erwähnten ersten Bereich der Regelung, in dem eine Spannungsregelung in dem unmittelbaren Umfelde der Sollspannung U_Soll stattfindet und bei dem Änderungen des Moments M bis zu einem vorgebbaren Überschussmoment zugelassen werden.
Wie die Kurve 40 zeigt, steigt der Laststrom I_Last zum Zeitpunkt T1 stark an, weil ein elektrische Verbraucher mit einer hohen Leistungsaufnahme zugeschaltet worden ist und das Bordnetz 13 belastet. Wie die Kurve 40 zeigt, hat diese starke Belastung einen Spannungseinbruch zur Folge. Die Generatorspannung sinkt unter die Sollspannung U_Soll und nähert sich dem unteren Grenzwert U_L. Hier liegt der zweite Bereich der Regelung vor, bei dem der Generator 12 die Last- und Spannungsänderung mit dem vorgebbaren und zur Verfügung stehenden Überschussmoment nicht mehr ausregeln kann, die Abweichung der Generatorspannung aber gerade noch innerhalb der zulässigen Grenzwerte U_H und U_L liegt. Um die Laständerung und die damit verbundene Spannungsabweichung zu kompensieren, ist eine Zunahme des Moments M vorgesehen und es wird von Spannungsregelung auf Momentenregelung übergegangen. Das Moment M steigt auf einen höheren Wert an, bis zum Zeitpunkt T2 ein Wert des Moments M erreicht ist, der zur Kompensation der Laständerung ausreicht. In diesem Zeitpunkt T2 hat die Generatorspannung U_Gen wieder ihren Sollwert U_Soll erreicht und es wird wieder eine Spannungsregelung durchgeführt. Die Erfindung ermöglicht hierbei eine außerordentlich flexible Anpassung an schwierige Betriebssituationen, um einerseits Laständerungen schnellstmöglich zu kompensieren und dabei eine möglichst hohe Spannungskonstanz zu gewährleisten. Dadurch werden eine hohe Zuverlässigkeit des Bordnetzes und eine größtmögliche Schonung spannungsempfindlicher Komponenten erreicht. Gemäß unterschiedlichen Ausführungsvarianten der Erfindung können für die Regelung des Moments in dem Bereich der Momentenregelung unterschiedliche Strategien eingesetzt werden. So kann in einer ersten Ausführungsvariante das Moment M linear ansteigen, wobei der Anstieg mit unterschiedlichen Steigungen realisierbar ist. Gemäß einer weiteren Ausführungsvariante kann für den Anstieg des Moments M eine komplexere, nicht lineare Abhängigkeit vorgesehen werden, wobei auch noch dynamische Anpassungen an die jeweilige Situation möglich sind, um ein optimales Ergebnis zu erzielen. Beispielsweise kann das Moment M nach einer Funktion F=F(T, P) verändert werden, wobei T die Zeit und P ein Betriebsparameter der Einrichtung bedeuten. In einer weiteren Ausführungsvariante kann eine funktionale Abhängigkeit des Moments von Einflussgrößen auch durch ein entsprechendes Kennfeld K realisiert werden, bei dem ein bestimmter Wert des Moments M entsprechenden Werten einer oder mehrerer Einflussgrößen zugeordnet ist.
Wie der Verlauf des Laststroms I_Last gemäß Kurve 42 in Figur 4 zeigt, fällt der Lastrom I_Last zum Zeitpunkt T3 stark ab. Beispielsweise wurde ein leistungsstarker elektrischer Verbraucher von dem Bordnetz 13 abgeschaltet. Aus dem Verlauf der Kurve 40 ist ersichtlich, dass infolgedessen die Generatorspannung U_Gen stark ansteigt und sogar den Maximalwert U_H übersteigt. Hier liegt jetzt der oben schon kurz erwähnte dritte Bereich vor, bei dem die Generatorspannung und damit die Bordnetzspannung außerhalb der zulässigen Grenzen U_H, U_L liegt. Bei dieser Situation hat die Spannungsregelung die höchste Priorität, da spannungsempfindliche Bauelemente oder Baugruppen stark gefährdet sind. Wie Kurve 41 zeigt wird daher zunächst dafür gesorgt, dass das Moment M auf einen entsprechend niedrigen Wert reduziert wird, um eine schnellstmögliche Spannungsabsenkung auf einen unkritischen Wert zu erreichen. Dies ist etwa zum Zeitpunkt T4 der Fall, bei dem die Spannung den Maximalwert U_H wieder erreicht oder unterschreitet. Zu diesem Zeitpunkt T4 setzt wieder eine Momentenregelung ein, bis das zu hohe Moment auf ein für die niedrigeren Leistungsanforderungen hinreichendes niedrigeres Niveau abgesenkt ist und die Spannung ihren Sollwert U_Soll wieder erreicht hat. Dies ist etwa ab dem Zeitpunkt T5 der Fall. Ab diesem Zeitpunkt wird wieder auf eine Spannungsregelung übergegangen.

Anhand der Kurvendarstellung in Figur 4 wurde eine Situation erläutert, bei der ein Anstieg der Spannung über den Maximalwert hinaus stattgefunden hat. Ein analoger Regelungsvorgang liefe bei einer Unterschreitung des Minimalwerts U_L der Spannung ab.

In einer Ausführungsvariante der Erfindung können die Werte U_Soll, U_H, U_L, sowie die Grenzen zwischen den beiden Regelungsarten Momentenregelung und Spannungsregelung und die Breite der Bereiche, in denen die jeweilige Regelungsart dominiert, applikationsspeziiisch vorgegeben werden.

In einer besonders vorteilhaften Ausführungsvariante der Erfindung , ist es jedoch auch möglich, wenigstens einige der genannten Größen auch noch während des Fahrbetriebs eines mit der elektrischen Einrichtung ausgestatteten Fahrzeugs dynamisch anzupassen. So können beispielsweise die Grenzen (siehe Darstellung in Figur 3), bei denen zwischen Spannungsregelung und Momentenregelung umgeschaltet wird, von Betriebskenngrößen der Einrichtung oder des Fahrzeugs abhängig gestaltet werden. Eine derartige Abhängigkeit kann zweckmäßig durch entsprechende Kennfelder realisiert werden. Entsprechend können auch die Breiten der Bereiche, in denen eine Spannungs- oder Momentenregelung stattfinden soll, oder die Übergangsstellen zwischen diesen Bereichen, variabel gestaltet werden. Diese Ausführungsvariante der Erfindung zeichnet sich durch eine besonders große Flexibilität aus.

### Bezugszeichenliste

- 1: System
- 10: Verbrennungsmotor
- 11: Motorsteuerung
- 12: Generator
- 12A: Maschine
- 12B: Regler
- 13: Bordnetz
- 14: Batterie
- 20: Triebstrang
- 21: Steuergerät
- 30: Bereich
- 31: Bereich
- 32: Bereich
- 33: Bereich
- 34: Bereich
- 40: Kurve Spannungsverlauf
- 41: Kurve Momentenverlauf
- 42: Kurve Lastromverlauf
- 43: Zeitachse
- M: Moment
- M_Überschuss: Überschussmoment
- n: Drehzahl
- T: Zeit
- T0: Zeit
- T1: Zeit
- T2: Zeit
- T3: Zeit
- T4: Zeit
- T5: Zeit
- dM/dt: zeitliche Änderung von M
- dn/dt: zeitliche Änderung von n
- U_Gen: Generatorspannung
- U_Soll: Sollspannung
- U_H: Maximalwert der Spannung
- U_L: Minimalwert der Spannung
- I_Err: Erregerstrom
- I_Last: Laststrom
- dI_Last/dt: zeitliche Änderung von I

## Patentansprüche

1. Elektrische Einrichtung mit einem Generator, insbesondere für die Verwendung in dem Bordnetz eines Kraftfahrzeugs, mit einem Regler für die Regelung der Generatorspannung, wobei Bereiche der Bordnetzspannung für die Regelung vorgesehen sind, in denen eine Spannungsregelung (Bereich 30) durchgeführt wird und Bereiche (31, 32), in denen eine Regelung des Moments des Generators durchgeführt wird, **dadurch gekennzeichnet, dass** der Bereich (30) für die Spannungsregelung sich in einem vorgebbaren Abstand um die Sollspannung (U_Soll) erstreckt.

2. Elektrische Einrichtung nach Anspruch 1, **dadurch gekennzeichnet, dass** der Übergang zwischen den Bereichen (30, 31, 32) und/oder die Breite der Bereiche (30, 31, 32) von Betriebskenngrössen der Einrichtung abhängig sind.

3. Elektrische Einrichtung nach einem der vorhergehenden Ansprüche, **dadurch gekennzeichnet, dass** der Bereich (30) von einem vorgebbaren Moment (Überschussmoment M_Überschuss) abhängig ist.

4. Elektrische Einrichtung nach einem der vorhergehenden Ansprüche, **dadurch gekennzeichnet, dass** die Bereiche (31, 32) für die Momentenregelung sich beidseitig des Bereichs (30) für die Spannungsregelung erstrecken.

5. Elektrische Einrichtung nach einem der vorhergehenden Ansprüche, **dadurch gekennzeichnet, dass** die Bereiche (31, 32) für die Momentenregelung innerhalb eines durch die Spannungsgrenzwerte (U_H, U_L) begrenzten Spannungsbereichs liegen.

6. Elektrische Einrichtung nach einem der vorhergehenden Ansprüche, **dadurch gekennzeichnet, dass** das Moment (M) in einem Bereich (31, 32) für die Momentenregelung nach einer linearen Funktion veränderbar ist.

7. Elektrische Einrichtung nach einem der vorhergehenden Ansprüche, **dadurch gekennzeichnet, dass** das Moment (M) in einem Bereich (31, 32) für die Momentenregelung nach einer beliebig vorgebbaren Funktion F = F (T, P) veränderbar ist, wobei T die Zeit ist und P ein Betriebsparameter der Einrichtung.

8. Elektrische Einrichtung nach einem der vorhergehenden Ansprüche, **dadurch gekennzeichnet, dass** das Moment (M) in einem Bereich (31, 32) für die Momentenregelung nach einer in einem Kennfeld (K) festgelegten funktionalen Abhängigkeit veränderbar ist.

9. Verfahren für den Betrieb einer einen Generator (12) mit einem Regler (12B) umfassenden elektrischen Einrichtung, insbesondere in Verbindung mit dem Bordnetz (13) eines Kraftfahrzeugs, wobei die Spannung des Bordnetzes (13) bzw. die Generatorspannung (U_Gen) erfasst wird, wobei geprüft wird, ob die erfasste Spannung in einem vorgebbaren Bereich für die Spannungsregelung um die Sollspannung (U_Soll) liegt, und eine Spannungsregelung auf die Sollspannung (U_Soll) durchgeführt wird, wenn die erfasste Spannung in dem vorgebbaren Bereich um die Sollspannung (U_Soll) liegt, und wobei eine Regelung des Moments (M) des Generators durchgeführt wird, **dadurch gekennzeichnet, dass** die Regelung des Moments (M) des Generators durchgeführt wird, wenn die erfasste Spannung ausserhalb des vorgebbaren Bereichs um die Sollspannung aber noch innerhalb eines durch Spannungsgrenzwerte (U_H, U_L) festgelegten Spannungsbereichs liegt, und dass eine höchste Priorität für die Spannungsregelung vorgegeben wird, wenn die erfasste Spannung ausserhalb des durch die Spannungsgrenzwerte (U_H, U_L) begrenzten Spannungsbereichs liegt.

10. Verfahren nach Anspruch 9, **dadurch gekennzeichnet, dass** bei der Regelung des Moments (M) das Moment nach einer linearen Funktion geändert wird.

11. Verfahren nach Anspruch 9, **dadurch gekennzeichnet, dass** bei der Regelung des Moments (M) das Moment nach einer beliebigen Funktion F = F(T, P) geändert wird, wobei T die Zeit und P ein vorgebbarer Betriebsparameter der Einrichtung bedeuten.

12. Verfahren nach Anspruch 9, **dadurch gekennzeichnet, dass** bei der Regelung des Moments (M) das Moment nach einer in einem Kennfeld (K) festgelegten funktionalen Abhängigkeit verändert wird.

13. Verfahren nach einem der Ansprüche 9 bis 12, **dadurch gekennzeichnet, dass** die Breite der Bereiche (30, 31, 32), in denen eine Spannungsregelung oder Momentenregelung durchgeführt wird und/oder die Übergangsstellen zwischen diesen genannten Bereichen bei der Applikation der Einrichtung fest vorgegeben werden.

14. Verfahren nach einem der Anspruch 9 bis 12, **dadurch gekennzeichnet, dass** die Breite der Bereiche (30, 31, 32), in denen eine Spannungsregelung oder Momentenregelung durchgeführt wird und/oder die Übergangsstellen zwischen diesen genannten Bereichen während des Fahrbetriebs des mit der Einrichtung ausgestatteten Fahrzeugs an Betriebsparameter der Einrichtung angepasst werden.

## Claims

1. Electrical device having a generator, in particular for use in the on-board electrical system of a motor vehicle, having a controller for controlling the generator voltage, with ranges of the on-board electrical system voltage being provided for control purposes, in which ranges the voltage is controlled (range 30), and ranges (31, 32) being provided in which the torque of the generator is controlled, **characterized in that** the range (30) for voltage control extends at a predefined distance around the setpoint voltage (U_set).

2. Electrical device according to Claim 1, **characterized in that** the transition between the ranges (30, 31, 32) and/or the width of the ranges (30, 31, 32) are/is dependent on characteristic operating variables of the device.

3. Electrical device according to one of the preceding claims, **characterized in that** the range (30) is dependent on a predefinable torque (excess torque M_excess).

4. Electrical device according to one of the preceding claims, **characterized in that** the ranges (31, 32) for torque control extend on both sides of the range (30) for voltage control.

5. Electrical device according to one of the preceding claims, **characterized in that** the ranges (31, 32) for torque control lie within a voltage range which is delimited by the voltage limit values (U_H, U_L).

6. Electrical device according to one of the preceding claims, **characterized in that** the torque (M) can be changed in accordance with a linear function in a range (31, 32) for torque control.

7. Electrical device according to one of the preceding claims, **characterized in that** the torque (M) can be changed in accordance with any desired predefinable function F = F(T, P), where T is time and P is an operating parameter of the device, in a range (31, 32) for torque control.

8. Electrical device according to one of the preceding claims, **characterized in that** the torque (M) can be changed in accordance with a functional dependency which is defined in a characteristic map (K) in a range (31, 32) for torque control.

9. Method for operating an electrical device comprising a generator (12) with a controller (12B), in particular in conjunction with the on-board electrical system (13) of a motor vehicle, with the voltage of the on-board electrical system (13) or the generator voltage (U_Gen) being detected, with a check being made as to whether the detected voltage lies in a predefinable range for voltage control purposes around the setpoint voltage (U_set), and the voltage being adjusted to the setpoint voltage (U_set) when the detected voltage lies in the predefinable range around the setpoint voltage (U_set), and with the torque (M) of the generator being controlled, **characterized in that** the torque (M) of the generator is controlled when the detected voltage is outside the predefinable range around the setpoint voltage but still within a voltage range defined by voltage limit values (U_H, U_L), and **in that** a highest priority is predefined for voltage control purposes when the detected voltage lies outside the voltage range delimited by the voltage limit values (U_H, U_L).

10. Method according to Claim 9, **characterized in that**, when the torque (M) is controlled, the torque is changed in accordance with a linear function.

11. Method according to Claim 9, **characterized in that,** when the torque (M) is controlled, the torque is changed in accordance with any desired function F = F(T, P), where T is time and P is a predefinable operating parameter of the device.

12. Method according to Claim 9, **characterized in that,** when the torque (M) is controlled, the torque is changed in accordance with a functional dependency which is defined in a characteristic map (K).

13. Method according to one of Claims 9 to 12, **characterized in that** the width of the ranges (30, 31, 32) in which voltage is controlled or torque is controlled and/or the transition points between these said ranges are/is firmly predefined when the device is employed.

14. Method according to one of Claims 9 to 12, **characterized in that** the width of the ranges (30, 31, 32) in which voltage is controlled or torque is controlled and/or the transition points between these said ranges are/is matched to operating parameters of the device during driving operation of the vehicle which is equipped with the device.

## Revendications

1. Système électrique doté d'un générateur, en particulier destiné à être utilisé dans le réseau de bord d'un véhicule automobile, et présentant un régulateur qui régule la tension du générateur, une plage de la tension du réseau de bord dans laquelle une régulation de tension (plage 30) est exécutée et des plages (31, 32) dans lesquelles une régulation du couple du générateur est exécutée étant prévues pour la régulation,
**caractérisé en ce que**
la plage (30) destinée à la régulation de tension s'étend sur une distance prédéterminée autour de la tension de consigne (U_Soll).

2. Système électrique selon la revendication 1, **caractérisé en ce que** la transition entre les plages (30, 31, 32) et/ou la largeur des plages (30, 31, 32) dépendent de grandeurs caractéristiques du fonctionnement du dispositif.

3. Système électrique selon l'une des revendications précédentes, **caractérisé en ce que** la plage (30) dépend d'un couple prédéterminé (couple excessif M_Überschuss).

4. Système électrique selon l'une des revendications précédentes, **caractérisé en ce que** les plages (31, 32) de régulation du couple s'étendent des deux côtés de la plage (30) de régulation de tension.

5. Système électrique selon l'une des revendications précédentes, **caractérisé en ce que** les plages (31, 32) de régulation du couple s'étendent à l'intérieur d'une plage de tension délimitée par les valeurs limites de tension (U_H, U_L).

6. Système électrique selon l'une des revendications précédentes, **caractérisé en ce que** dans une plage (31, 32) de régulation du couple, le couple (M) peut être modifié suivant une fonction linéaire.

7. Système électrique selon l'une des revendications précédentes, **caractérisé en ce que** dans une plage (31, 32) de régulation de couple, le couple (M) peut être modifié selon une fonction F = F(T, P) prédéterminée de manière quelconque, dans laquelle T représente le temps et P un paramètre de fonctionnement du dispositif.

8. Système électrique selon l'une des revendications précédentes, **caractérisé en ce que** dans une plage (31, 32) de régulation du couple, le couple (M) peut être modifié selon une dépendance fonctionnelle définie dans un champ de caractéristiques (K).

9. Procédé de conduite d'un système électrique qui comprend un générateur (12) doté d'un régulateur (12B), en particulier relié au réseau de bord (13) d'un véhicule automobile, dans lequel la tension du réseau de bord (13) ou la tension du générateur (U_Gen) sont détectées, le procédé vérifiant si la tension détectée est située dans une plage prédéterminée pour la régulation de tension autour de la tension de consigne (U_Soll), une régulation de la tension à la tension de consigne (U_Soll) étant exécutée lorsque la tension détectée est située dans la plage prédéterminée autour de la tension de consigne (U_Soll) et une- régulation du couple (M) du générateur étant exécutée,
**caractérisé en ce que**
la régulation du couple (M) du générateur est exécutée lorsque la tension détectée est située à l'extérieur de la plage prédéterminée autour de la tension de consigne mais encore à l'intérieur d'une plage de tension définie par des valeurs limites de tension (U_H, U_L) et
**en ce que** la priorité la plus élevée est attribuée à la régulation de tension lorsque la tension détectée est située à l'extérieur de la plage de tension délimitée par les valeurs limites de tension (U_H, U L).

10. Procédé selon la revendication 9, **caractérisé en ce que** lors de la régulation du couple (M), le couple est modifié selon une fonction linéaire.

11. Procédé selon la revendication 9, **caractérisé en ce que** dans la régulation du couple (M), le couple est modifié selon une fonction quelconque F = F(T, P) dans laquelle T représente le temps et P un paramètre de fonctionnement prédéterminé du dispositif.

12. Procédé selon la revendication 9, **caractérisé en ce que** dans la régulation du couple (M), le couple est modifié selon une dépendance fonctionnelle définie dans un champ de caractéristiques (K).

13. Procédé selon l'une des revendications 9 à 12, **caractérisé en ce que** la largeur des plages (30, 31, 32) dans lesquelles une régulation de la tension ou une régulation du couple sont exécutées et/ou les emplacements de transition entre lesdites plages sont prédéterminés par l'application à laquelle le dispositif est destiné.

14. Procédé selon l'une des revendications 9 à 12, **caractérisé en ce que** la largeur des plages (30, 31, 32) dans lesquelles une régulation de tension ou une régulation du couple sont exécutées et/ou les emplacements de transition entre lesdites plages pendant que le véhicule équipé du dispositif roule sont adaptés à des paramètres de fonctionnement du dispositif.
